(19)

Europäisches Patentamt
European Patent Office
Office européen des brevets

(11) **EP 2 192 788 A2**

(12) **EUROPÄISCHE PATENTANMELDUNG**

(43) Veröffentlichungstag:
**02.06.2010 Patentblatt 2010/22**

(51) Int Cl.:
***H04R 1/08*** *(2006.01)*      ***H04B 7/00*** *(2006.01)*

(21) Anmeldenummer: **09015915.3**

(22) Anmeldetag: **30.12.2004**

(84) Benannte Vertragsstaaten:
**AT BE BG CH CY CZ DE DK EE ES FI FR GB GR
HU IE IS IT LI LT LU MC NL PL PT RO SE SI SK TR**

(30) Priorität: **30.12.2003 DE 10361817**

(62) Dokumentnummer(n) der früheren Anmeldung(en)
nach Art. 76 EPÜ:
**04804418.4 / 1 706 951**

(71) Anmelder: **Sennheiser Electronic GmbH & Co. KG
30900 Wedemark (DE)**

(72) Erfinder:
  • **Buhe, Gerrit
    30900 Wedemark (DE)**

  • **Haupt, Axel
    30855 Langenhagen (DE)**
  • **Plath, Frank
    30900 Wedemark (DE)**
  • **Watermann, Jan
    30163 Hannover (DE)**

(74) Vertreter: **Eisenführ, Günther
    Eisenführ, Speiser & Partner
    Patentanwälte Rechtsanwälte
    Postfach 10 60 78
    28060 Bremen (DE)**

Bemerkungen:
Diese Anmeldung ist am 23-12-2009 als
Teilanmeldung zu der unter INID-Code 62 erwähnten
Anmeldung eingereicht worden.

(54) **Digitales Mikrofon**

(57)    Die Erfindung betrifft ein Verfahren zur Übertragung von digitalisierten Audioinformationen in hoher Qualität und mit geringer Verzögerung, insbesondere Verfahren zur Übertragung von digitalisierten Audioinformationen in einer Audioaufnahme (Mikrofon) und/oder Wiedergabestrecke. Erfindungsgemäß wird ein Kanalfilter vorgeschlagen, der zur Formung des Hochfrequenzspektrums der Übertragung eingesetzt wird, wobei das Spektrum in einem ersten Bereich von etwa 100 bis 300 kHz Nutzbandbreite keine Dämpfung aufweist und in einem Bereich außerhalb von dem ersten Bereich eine Sperrdämpfung von insbesondere bevorzugt mehr als 60 dB bzw. mehr als 80 dB aufweist (Figur 13).

Fig.1

EP 2 192 788 A2

**Beschreibung**

Die vorliegende Erfindung betrifft bevorzugt ein Mikrofon, insbesondere ein digitales Mikrofon, also ein Mikrofon, bei welchem das Signal, welches aus dem Mikrofonwandler herauskommt, bereits im Mikrofon digitalisiert wird und das entsprechende Mikrofonsignal digital vom Mikrofon, sei es über Kabel oder drahtlos, z. B. in einem Mikrofonempfänger, Vorverstärker etc. abgegeben wird.

Hochqualitative Audiodaten erzeugen nach der A/D-Wandlung hohe Datenmengen. Tastet man - wie z. B. in der Studiotechnik üblich - ein Audiosignal mit 48 kHz bei einer Wortbreite von z. B. 16 Bit ab, entsteht ein Datenstrom von 768000 Bit/s pro Kanal, was bei einem Stereo kanal bereits mehr als 1,5 MBit/s bedeutet.

Um die so generierten Daten vor Übertragungsfehlern zu schützen, wird Redundanz in Form zusätzlicher Bits hinzugefügt, die auf der Empfangsseite zur Fehlererkennung und Fehlerkorrektur benutzt werden. Die zu übertragende Datenmenge erhöht sich dadurch nochmals, je nach gewünschter Korrekturkapazität, erheblich.

Um die zu übertragende Datenmenge zu reduzieren, werden häufig Audiodaten-Kompressionsverfahren, z. B. nach dem MPEG-Standard, eingesetzt. Diese reduzieren die im Audiosignal enthaltene Redundanz, indem sie längere Blöcke von Audiodaten nach verschiedenen Verfahren bearbeiten. Mit steigender Blockgröße steigt die erzielbare Kompressionsrate und sinkt damit die Datenmenge. Bekannt sind verlustbehaftete und verlustlose Verfahren, wobei erstere eine höhere Kompressionsrate erreichen.

Durch diese Blockbildung erzeugt man eine Verzögerung im Übertragungssystem, da ein Datenblock erst bearbeitet werden kann, wenn er komplett eingelaufen ist. Dies gilt sowohl für die Sende- als auch für die Empfangsseite. Dieser Effekt ist bei einigen Anwendungen unerwünscht, insbesondere bei Studioapplikationen, bei denen Mikrofone der vorliegenden Art insbesondere eingesetzt werden sollen.

Befindet sich die Übertragungsstrecke am Anfang einer Audio-Produktionskette, ist die Redundanzminderung im Audiosignal von Nachteil. Nachfolgende Produktionsschritte könnten das Audiosignal so beeinflussen, dass die Qualität deutlich leidet. Weiterhin würde die freie Gestaltungsmöglichkeit von Tonmeistern eingeschränkt. Kompressionsverfahren sind daher bei hochqualitativen Übertragungssituationen, also z. B. im Studio auf der Strecke vom Mikrofon zum Vorverstärker, Mischer, Aufnahmegerät etc. unerwünscht.

Komprimierte Audiosignale sind empfindlicher gegen Übertragungsfehler. Durch Störung weniger Bits innerhalb eines komprimierten Datenblocks kann der gesamte Block unbrauchbar werden. Daher sind erhöhte Vorkehrungen für die Fehlerkorrektur zu treffen, wodurch die zu übertragende Datenmenge wieder ansteigt. Bei bestimmten Fehlerszenarien kann die Reduktion der Datenmenge durch den notwendigen Fehlerschutz vollständig aufgezehrt und sogar ins Gegenteil gekehrt werden.

Die oben beschriebenen Aspekte lassen die Verwendung von Audiodatenkompressionen grundsätzlich problematisch erscheinen, so dass von deren Verwendung möglichst ganz Abstand genommen werden sollte, zumindest bei der Aufnahme von Audio im Studio.

Heutige Systeme zur digitalen drahtlosen Funkübertragung von Audiodaten, die ohne Kompressionsverfahren oder nur mit geringen Kompressionsfaktoren auskommen müssen, arbeiten in Frequenzbereichen, die hohe belegte Bandbreiten zulassen. Beliebt sind die ISM-Bänder bei 900 MHz und 2400 MHz. Dort kann die belegte Bandbreite mehrere MHz betragen. Allerdings werden diese Frequenzbereiche auch von vielen anderen Funksystemen benutzt. Eine Priorisierung bestimmter Anwendungen ist aufgrund von Zulassungsbestimmungen in diesen Frequenzbereichen nicht möglich. Die Übertragung von Audiodaten von Mikrofonen zum Empfänger ist dadurch gefährdet, jederzeit in unerwünschter Weise gestört zu werden, weil möglicherweise andere Sender in der Nähe auf dem gleichen Frequenzband senden.

Für professionelle Anwendungen stehen Frequenzbereiche außerhalb der ISM-Bänder ohne allgemeine Freigabe zur Verfügung. Eine Übertragung wäre dort ungestört möglich. Historisch, durch analoge Funkübertragung bedingt, gelten für diese Frequenzbereiche allerdings Zulassungsvorschriften, die niedrige belegte Bandbreiten erfordern. So ist z. B. für Funkmikrofone im UHF-Bereich (in Europa) eine belegte Bandbreite von maximal 200 kHz vorgeschrieben.

Hochqualitative und damit hochdatenratige digitale Übertragungssysteme mit wenig Übertragungsverzögerung in so schmalen Bandbreiten sind aber nicht verfügbar.

Es ist damit Ziel der Erfindung, ein digitales Übertragungsverfahren als solches, insbesondere aber für Mikrofone bzw. Funkstrecken zu entwickeln, bei welchem hohe Datenströme von Audiodaten übertragen werden können, nicht zwingend Audiodaten-Kompressionsverfahren benutzt werden müssen, ausreichend Übertragungsrate auch für Fehlerkorrekturverfahren bereitgestellt wird, welches eine sehr geringe Verzögerung aufweist und sowohl für Sender als auch für Empfänger einen Batteriebetrieb zulässt und eine geringe belegte Bandbreite im Funkkanal aufweist.

Erfindungsgemäß werden diese Ziele erreicht durch ein Übertragungsverfahren mit den Merkmalen nach den unabhängigen Ansprüchen bzw. durch ein Mikrofonsystem/Funkstrecke zur Ausführung des Übertragungsverfahrens. Vorteilhafte Weiterbildungen sind in den Unteransprüchen und der Beschreibung wie auch in den Zeichnungen offenbart.

Eine besondere Eigenschaft des erfindungsgemäßen Übertragungsverfahrens bzw. des erfindungsgemäßen Mikrofons besteht darin, dass die Übertragung mit einer hohen Datenrate bei gleichzeitig geringer Bandbreite in Echtzeit möglich ist. So kann z.B. mit etwa 2 bis 8 Bit/Symbol, bevorzugt 4 Bit/Symbol eine qualitativ hochwertige Übertragung der Audiosignale des Mikrofons bewerkstelligt werden. Hierbei steht nicht nur die drahtlose Audio-Mikrofonübertragung im Vordergrund, sondern auch die drahtgebundene Audio-Mikrofonübertragung.

Die besonderen Vorteile und das Wesen der Erfindung sind in der nachfolgenden Beschreibung näher erläutert.

Hierzu zeigen die Darstellungen:

**Figur 1** Komponenten einer Sendeeinrichtung,

**Figur 2** Komponenten einer Empfangseinrichtung,

**Figur 3** ein Blockschaltbild der Audioquelle,

**Figur 4** eine spezielle nichtlineare Kennlinie,

**Figur 5** die asynchrone Taktung einer A/D-Wandlereinrichtung.

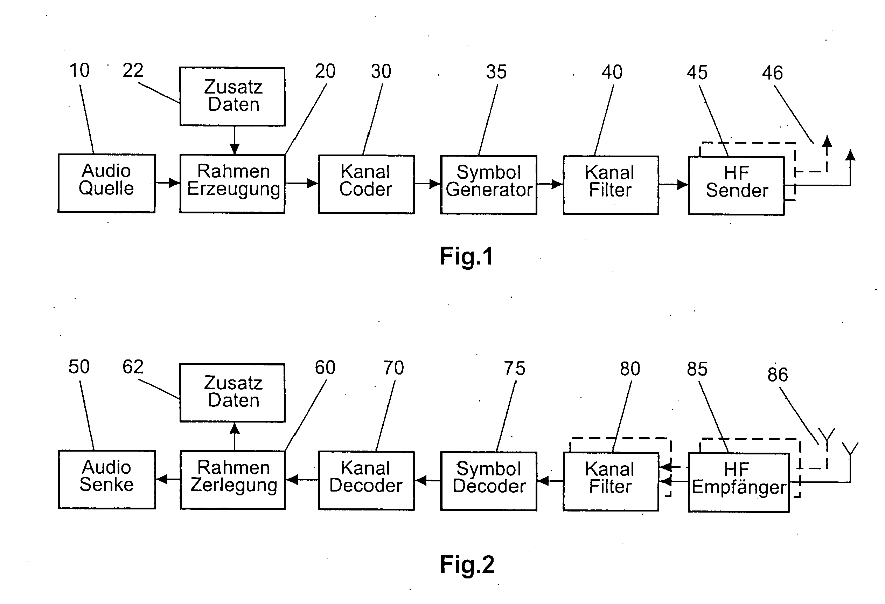

In einer Sendeeinrichtung gemäß Figur 1 liefert eine Audioquelle 10 einen digitalen Datenstrom, der zur Übertragung ansteht. Diese Audioquelle kann eine nichtlineare Kennlinie enthalten, die eine Umcodierung des Signals für kürzere Wortlängen durchführt.

In regelmäßigen Abständen fügt die Rahmenerzeugung 20 Zusatzdaten 22 in den Datenstrom ein. Diese dienen zur Synchronisation des Datenstroms auf der Empfängerseite und/oder zur Übertragung von Statusdaten des Senders und/oder zur Übertragung einer Prüfsumme oder anderer Daten zur Steuerung oder Kontrolle des Senders bzw. des Empfängers. Die Rahmenerzeugung ist in der Lage, einen Datenstrom auszugeben, der nach Relevanz der Daten sortiert ist. Bits mit hoher Wichtigkeit und Bits mit niedriger Wichtigkeit können so an bestimmten Positionen im Rahmen einsortiert werden.

Im Kanal-Coder 30 wird den Nutzdaten Redundanz zur Fehlerkorrektur auf der Empfängerseite hinzugefügt. Dazu werden die einlaufenden Daten in kurze Pakete der Länge N gruppiert. Aus diesen werden Codewörter der Länge M>N gebildet. Die Pakete der Länge N enthalten Daten verschiedener Relevanzstufen, welche autarken Fehlerkorrektursystemen zugeführt werden können. Die Relevanzstufen bleiben damit in den Paketen der Länge M erhalten.

Ein nachfolgender Symbol-Generator 35 bildet aus einem Codewort ein komplexes Modulationssymbol. Er bedient sich dabei aus einem Symbolvorrat der Menge $2^M$. Die einzelnen Modulationssymbole unterscheiden sich dabei hinsichtlich der Amplitude und/oder der Phase. Jedes Symbol repräsentiert M Bit des redundanz-behafteten Datenstroms. Die verschiedenen Relevanzstufen können dabei entsprechenden Bitpositionen innerhalb des Symbols zugeordnet werden. Daten mit hoher Relevanz werden sichereren Positionen zugeordnet und umgekehrt.

Alternativ kann der Symbolgenerator so ausgelegt werden, dass jeweils die Differenz zum vorangegangenen Codewort zu einem Modulationssymbol umgewandelt wird.

Ein anschließendes Kanal-Filter 40 begrenzt das Spektrum des Symbolstroms und formt somit das Sendespektrum.

Im einem HF-Sender 45 wird der gefilterte Symboldatenstrom in ein analoges Signal gewandelt und auf einen HF-Träger aufmoduliert, verstärkt und über eine Antennenanordnung 46 abgestrahlt. Dabei können Einzelantennen ebenso zur Anwendung kommen, wie Antennenanordnungen aus mehreren Segmenten, die automatisch dasjenige Segment bevorzugt ansteuern, das eine optimale Ausstrahlung aufweist.

In einer Empfangseinrichtung entsprechend Figur 2 empfängt eine ein- oder mehrkanalige Antennenanordnung 86 das HF-Signal.

Dieses wird in einem ein- oder mehrkanaligen HF-Empfänger 85 verstärkt, grob vorgefiltert, vom HF-Träger getrennt und in ein digitales Datensignal gewandelt. Die Analog/Digital-Umsetzung erfolgt jeweils in einer Wandlereinrichtung, die mit einem zum Sender asynchronen, autarken und festen Takt betrieben wird. Dadurch wird das Taktjitter minimiert. Die nachfolgende digitale Signalverarbeitung arbeitet jeweils ebenfalls in Teilen asynchron zum Sender und wird abschließend erst in der Audio-Senke 50 synchronisiert.

Ein ein- oder mehrkanaliger Kanalfilter 80 selektiert das Sendespektrum und rekonstruiert jeweils den gesendeten Symbolstrom.

Ein Symbol-Decoder 75 rekonstruiert aus einem oder mehreren Symbolströmen die komplexen Modulationssymbole aus dem Symbolvorrat $2^M$. Zur Kombination mehrerer Symbolströme können Seiteninformationen aus den jeweiligen Empfangspegeln, den jeweiligen Abständen des Symbols von der idealen Position und/oder den Verzerrungen des Übertragungskanals herangezogen werden.

Die so ermittelten Codewörter der Länge M werden im Kanal-Decoder 70 auf Fehler geprüft und evtl. korrigiert. Die im Sender hinzugefügte Redundanz wird entfernt und die Pakete der Länge N zu einem Gesamtrahmen zusammengesetzt.

In einer Rahmenzerlegung 60 werden die auf der Sendeseite zugefügten Zusatzdaten 62 abgespalten, evtl. ausgewertet und der übertragene Audiodatenstrom ausgegeben. Die zuvor nach Relevanz sortierten Bits werden wieder in ihre ursprüngliche Position zurückgebracht.

Eine Audio-Senke 50 beinhaltet ein Verfahren zur Detektion und Verschleierung von Restfehlern, welches keine Nebeninformationen aus dem Datenstrom enthält. Lediglich eine Prüfsumme testet den Datenstrom auf vorhandene Restfehler. Die von diesem Verfahren ermittelten Korrekturwerte kommen nur dann zur Anwendung, wenn ein empfangener Rahmen sicher als fehlerhaft erkannt wurde.

Einige der beschriebenen Komponenten, deren Funktion und/oder deren Kombination sind bereits aus verschiedenen technischen Bereichen bekannt.

Die bereits beschriebene Aufgabe wird jedoch erfindungsgemäß dadurch gelöst, dass für die Komponenten teilweise neue Lösungswege beschritten werden, die erforderlichen Parameter so gewählt werden, dass sehr vorteilhafte Lösungen entstehen oder neue Funktionalitäten eingefügt werden, die für die hier ins Auge gefasste Anwendung besonders vorteilhaft sind.

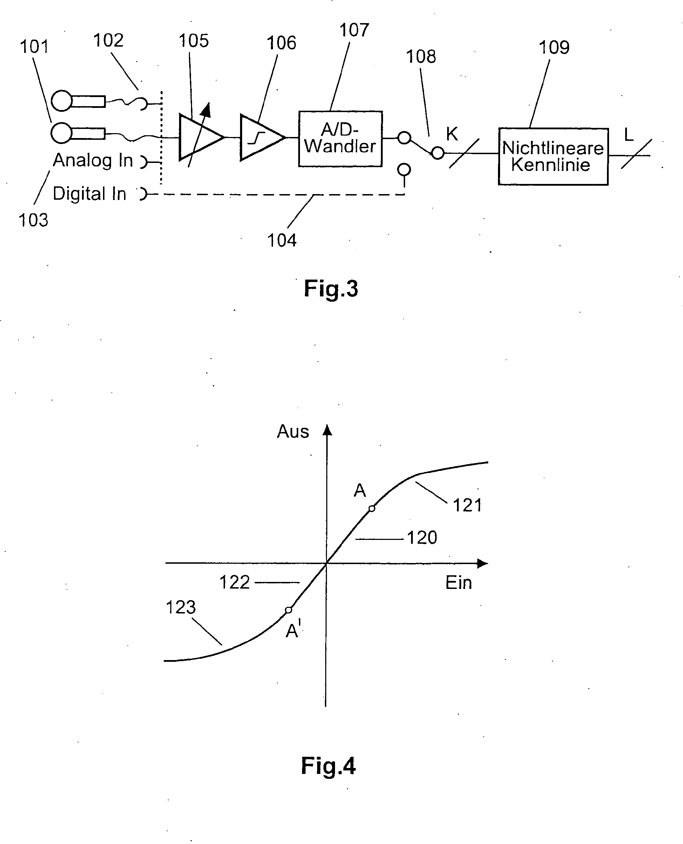

Eine Audioquelle, speziell zur Übertragung digitaler Audiodaten, zeigt Figur 3. Ihre Aufgabe ist es, den zu übertragenden digitalen Datenstrom bereitzustellen.

Die Anordnung enthält daher Mittel, um ein analoges Eingangssignal und eine Digitalisierungseinrichtung aufzunehmen. Zum Zuführen der analogen Eingangssignale enthält die Anordnung entweder eine Steckverbindung 102 für ein Mikrofon und/oder ein direkt angeschlossenes Mikrofon 101 und/oder einen allgemeinen analogen hochpegeligen Eingang 103.

Das Eingangssignal wird über einen einstellbaren Verstärker 105 an den Aussteuerungsbereich eines A/D-Wandlers 107 angepasst. Zur Vermeidung einer Übersteuerung ist eine Begrenzungseinrichtung 106 enthalten.

Der A/D-Wandler liefert digitale Abtastwerte der Breite K. In der Studiotechnik sind dies in der Regel 24 Bit.

Eine nachgeschaltete nichtlineare Kennlinie 109 verringert die Wortbreite des Abtastwertes auf die Breite L. Dabei wird eine Verschlechterung des Signal-/Rauschabstandes bewusst in Kauf genommen.

Allerdings sind die aus dem Bereich der Telekommunikation bekannten Segment-Kennlinien hier ungeeignet. Deren Segmentierung hat eine stufige Veränderung des Signal-/Rauschabstands zur Folge. Dies ist in den Maßstäben der Studiotechnik hörbar und daher zu vermeiden.

Eine Kennlinie gemäß der Erfindung entsprechend Figur 4 vermeidet die zuvor beschriebenen Nachteile.

Für kleine Eingangssignale 120 ist ein linearer Zusammenhang zwischen Eingangs-und Ausgangssignal vorgesehen. Für größere Eingangssignale 121 ist ein nichtlinearer Zusammenhang zwischen Eingangs- und Ausgangssignal vorgesehen. Dies könnte z. B. ein logarithmischer Zusammenhang sein. An der Stoßstelle A zwischen den Segmenten 120 und 121 ist Segment 121 so berechnet, dass es stetig, d. h. ohne Knick, in das Segment 120 übergeht. Bezogen auf die Stoßstelle A bildet Segment 120 die Tangente des Segmentes 121.

Durch die Wahl der Stoßstelle A, die Steigung des Segmentes 120 und die Krümmung des Segmentes 121 lassen sich die Eigenschaften der Kennlinie in weiten Grenzen variieren. Für negative Eingangswerte gelten die Segmente 122 und 123 mit der Stoßstelle A' entsprechend symmetrisch wie in Figur 4 dargestellt.

Weiterhin ist es möglich, das Segment 121 bzw. 123 in Teilsegmente unterschiedlicher Krümmung zu unterteilen, wobei die Krümmungen so zu wählen sind, dass ein stetiger Übergang gewährleistet ist.

Alternativ kann die Wortbreite durch Abschneiden der niederwertigen Bits reduziert werden, wobei vorzugsweise ein Dithering-Algorithmus für eine weiße Rauschformung benutzt wird.

Zusätzlich oder alternativ kann die Audioquelle einen digitalen Eingang 104 aufweisen. In diesem Fall wird das bereits digitale Signal direkt der nichtlinearen Kennlinie 109 zugeführt. Evtl. ist ein Umschalter 108 notwendig, um zwischen verschiedenen Eingängen, seien sie analoger oder digitaler Natur, umzuschalten.

Für die Parameterauslegung der Rahmenerzeugung, des Kanal-Coders und des Symbolgenerators gilt, dass man grundsätzlich frei ist in der Wahl der Rahmenlänge, der Anzahl der redundanten Bits für eine Fehlerkorrektur und der Anzahl von Bits, die pro Symbol übertragen werden sollen.

Eine wesentliche Einschränkung ist hier die niedrige Bandbreite in der HF-Übertragung. Man muss daher die Zahl der Bits, die übertragen werden müssen, möglichst niedrig halten. Es ist daher nicht möglich, eine große Menge an redundanten Bits hinzuzufügen. Weiterhin ist es notwendig, mehrere Bits pro Symbol zu übertragen. Einen deutlichen Einfluss hat auch die Anzahl der Zusatzbits, die notwendig sind, um den Datenstrom auf der Empfängerseite zu organisieren bzw. zu synchronisieren.

Eine weitere Einschränkung ist die zulässige Verzögerungszeit. Große Rahmenlängen können große Ein- und Ausgangspuffer auf der Sende- und Empfangsseite erfordern, wodurch die Verzögerungszeit ansteigt. Das gleiche gilt für Kanal-Codes mit großer Blocklänge.

Um die erforderliche Datenmenge mit wenig belegter Bandbreite übertragen zu können, werden M Bits gleichzeitig in einem Modulationssymbol übertragen.

Erfindungsgemäß wird davon abhängig ein Kanal-Coder 30 so gewählt, dass er ausgehend von Datenblöcken der Länge N, Ausgangswörter der gleichen Länge M wie das Modulationssymbol erzeugt.

Weiterhin wird die Rahmenlänge als ganzzahliges Vielfaches der Wortlänge L der Abtastwerte gewählt und gleichzeitig als ganzzahliges Vielfaches der Länge N.

Werden im Rahmen Zusatzdaten z. B. für eine Synchronisation benötigt, so sind diese unter Weglassung von Abtastwerten in den Rahmen einzubetten.

Durch eine Parameterauslegung nach den o. a. Regeln wird der Aufwand für eine Datensynchronisation minimiert. Die Kanal-Codeworte sind automatisch durch das Modulationssymbol synchronisiert. Für die Synchronisation des gesamten Rahmens reicht ein kurzes Bitmuster. Da der gesamte Rahmen durch einen Kanal-Coder läuft, sind alle Bits gegen Übertragungsfehler geschützt, inklusive aller Zusatzbits. Die Anzahl der notwendigen Zusatzbits wird minimiert.

Alternativ können einige Bits von diesem Schutz ausgenommen werden, wenn sie als weniger relevant oder weniger schützenswert angesehen werden.

Eine besonders vorteilhafte Ausprägung ergibt sich, wenn man die Anzahl der Bits pro Modulationssymbol als ganzzahliges Vielfaches der Ausgangswortbreite des Kanal-Coders wählt.

Obige Regeln gelten auch, wenn man als Basis nicht nur einen Rahmen betrachtet, sondern mehrere Rahmen zu einer Gruppe zusammenfasst, und diese Gruppe dann als Rahmen im o. a. Sinne betrachtet.

Üblicherweise werden in einem digitalen Empfänger für Audiosignale alle Komponenten mit einem Takt betrieben, der von einem gemeinsamen Muttertakt durch Teilung abgeleitet wird. Dazu zählt insbesondere auch der Takt für die A/D-Wandlereinrichtung, die die vom HF-Teil einlaufenden analogen Signale digitalisiert. Dieser Muttertakt wird durch eine Taktrückgewinnungsschaltung so verstellt, dass er exakt auf das Sendesignal abgestimmt ist.

Diese Anordnung ist immer mit einem gewissen Taktjitter behaftet, der bei der A/D-Wandlung zu einem suboptimalen Ergebnis führt.

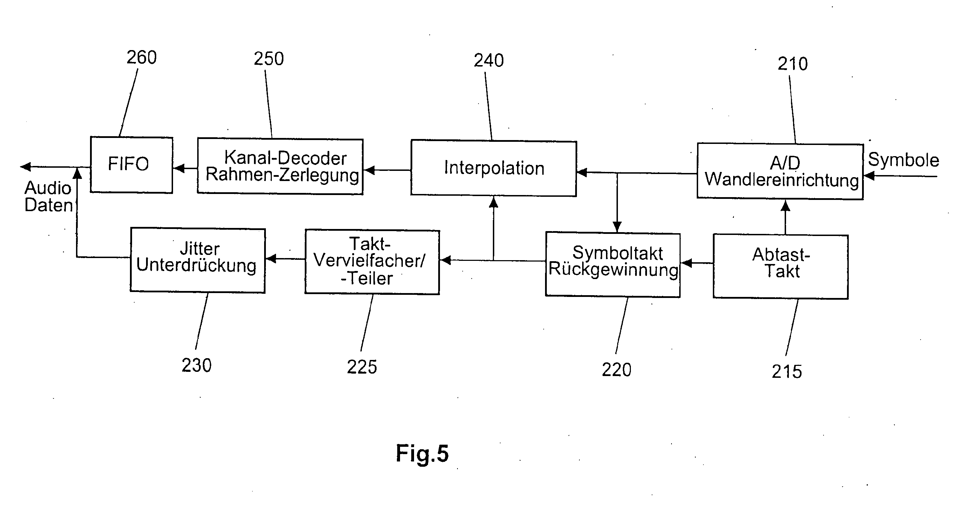

Erfindungsgemäß wird durch die in Figur 5 dargestellte Anordnung dieser vorgenannte Nachteil vermieden.

Die einlaufenden analogen Signale, die einen gefilterten Symboldatenstrom darstellen, werden auf eine A/D-Wandlereinrichtung 210 gegeben.

Der Abtasttakt 215 arbeitet unabhängig von der gesamten restlichen Taktung des Systems. Er ist fest auf eine Frequenz, die ein Mehrfaches der notwendigen Basisband-Abtastrate ist, eingestellt. Die digitalisierten Symbole laufen in eine Interpolationseinrichtung 240 und eine Symboltakt-Rückgewinnungseinrichtung 220 ein.

Die Symboltakt-Rückgewinnung berechnet auf der Basis des digitalisierten Symbolstroms die wahre Symbolrate und gibt sie ebenfalls an die Interpolationseinrichtung 240.

In der Interpolationseinrichtung 240 werden die Symbole mit der wahren Symbolrate neu abgetastet und somit auf die wahre Symbolrate reduziert.

Die so gewonnenen Symbole durchlaufen dann die weitere Empfängerschaltung 250, namentlich den Kanal-Decoder und die Rahmenzerlegung und laufen dann in einen kurzen FIFO-Speicher 260 ein. Der Auslesetakt für den FIFO-Speicher basiert auf dem wahren Symboltakt, der durch einen Taktvervielfacher und/oder Taktteiler 225 und eine Jitter-Unterdrückung 230 gewonnen wird.

In Ergänzung oder alternativ zu dem zuvor beschriebenen Übertragungsverfahren betrifft die vorliegende Anmeldung auch ein berührungssensitives Antennen-Diversity für ein Funksendemikrofon. Dieses Antennen-Diversity kann zusammen mit einem digitalen Mikrofon (wie zuvor beschrieben) ausgeführt werden oder auch unabhängig davon. Ein solches Funkmikrofon mit angeschlossener Antenne strahlt ein moduliertes HF-Signal ab.

Wenn dann die Aufgabe besteht, die Übertragungssicherheit des übertragenen HF-Signals zu erhöhen und damit eine qualitativ hochwertige Signalübertragung zu erreichen, so muss in diesem Zusammenhang darauf hingewiesen werden, dass ein Antennen-Diversity bei Mikrofonempfängern üblich ist, um durch Mehrwegeausbreitung hervorgerufene Feldstärkeeinbrüche zu minimieren.

Üblicherweise bestehen Funkmikrofone aus einem Mikrofon, einem Gehäuse mit innenliegender Sendereinheit und einer Sendeantenne. Diese Funktionseinheiten sind gewöhnlich so zusammengefasst, dass die genaue Lage der Sendeantenne nicht unbedingt zu erkennen ist. Dadurch ist es üblich, dass ein handgehaltenes Mikrofon nicht nur an seinem Gehäuse gehalten wird, sondern auch an der Antenne oder am Mikrofonkorb.

Durch das Greifen des Mikrofons an der Sendeantenne wird diese abgeschattet und deren Fußpunktimpedanz verändert. Gleichzeitig wird die Hand einen nicht unerheblichen Teil der Sendeenergie absorbieren. Diese Effekte reduzieren die abgestrahlte Sendeleistung erheblich und führen zu einem deutlichen Reichweiteverlust.

Hier schlägt nun die Erfindung vor, einen Mikrofon-Handsender mit zwei Antennen auszustatten, die wahlweise oder gewichtet mit der Sendereinheit verbunden werden. Diese Antennen befinden sich an unterschiedlichen, möglichst weit voneinander entfernten Positionen des Mikrofons, z. B. am Mikrofonkorb einerseits und am Ende des Mikrofongriffes andererseits. Hierzu müssen die Antennen elektrisch vom Mikrofongehäuse isoliert werden und galvanisch oder kapazitiv mit einer Umschalteinheit verbunden werden. Diese Umschalteinheit, die zwischen Sender und Antenne angebracht ist, kann aus einem HF-Schalter oder einem Zirkulator bestehen, der mit den Diversity-Antennen verbunden ist.

Bei Anwendung eines Umschalters wird das Schaltkriterium im Detektor aus der im Leitungskoppler detektierten reflektierten Leistung gewonnen. Eine vollständige Abschattung beider Diversity-Antennen zur gleichen Zeit ist durch den großen Abstand beider Antennen sehr unwahrscheinlich. Tritt dieser Fall trotzdem ein, kann davon ausgegangen werden, dass eine der beiden Antennen sich durch ihren größere geometrischen Abmessungen weniger abschirmen lässt, als die andere Antenne.

Das Schaltkriterium kann darüber hinaus auch von einem Berührungssensor abgenommen werden, der eine Widerstandsänderung des Sensors zum Gehäuse oder Brummspannungserhöhung des Sensors auswertet und den Schaltvorgang auslöst.

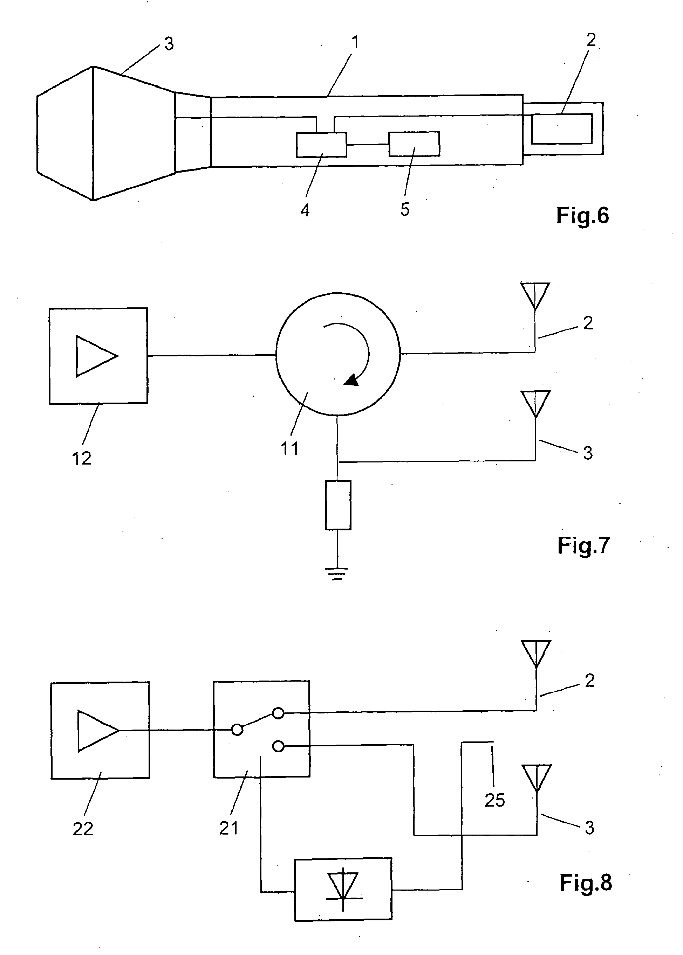

Die vorbeschriebene, auch eigenständig zu verwendende Lösung des berührungssensitiven Antennen-Diversitys für Funksendemikrofone ist in den weiteren **Figuren 6, 7, 8 und 9** gezeigt. In diesen Figuren bedeuten die einzelnen Bezugszeichen:

1 - Mikrofon
2 - Diversity-Antenne am hinteren Ende des Mikrofons
3 - Diversity-Antenne am vorderen Ende (Korb)
4 - Umschalteinheit
5 - Sender
6 - Gehäusesensor für Widerstands- oder Brummspannungsänderungen
11 - Zirkulator
12 - Verstärker
21 - HF-Schalter
22 - Verstärker
25 - Leitungskoppler
26 - Detektor

Zusätzlich, aber auch separiert zu vorbeschriebenen Übertragungsverfahren bzw. beschriebenen Mikrofon kann ein Verfahren zur relevanzangepassten Fehlerschutzkodierung von digitalen Audiodaten eingesetzt werden, um somit die gesamte Qualität der Audiodatenübertragung zu verbessern.

Es kann bei digitalen drahtlosen Übertragungssystemen eingesetzt werden (aber auch sonst), die eine Kombination aus einem hochwertigen digitalen Modulationsverfahren mit Übertragungsdaten unterschiedlicher Relevanzstufen enthalten. Als Beispiel besitzen 16 Bit-PCM-kodierte Audiodaten auch 16 Relevanzstufen. Bei einer digitalen Modulation mit 4 Bit pro Symbol ergeben sich, je nach Zuordnung der Bits zum Modulationssystem, nun auch bis zu 4 Qualitätsstufen unterschiedlicher Bitfehlerrate. Die PCM-Bits mit höchstem Informationsgehalt werden nun den Symbol-Bits hoher Qualität zugeordnet und umgekehrt.

Das relevanzangepasste Fehlerschutzcodierungsverfahren beruht auf der Ausnutzung systemimmanenter Unterschiede in der unkorrigierten Bitfehlerrate zwischen den einzelnen Ausgangsbitpositionen höherwertiger, digitaler Modulationsarten. Durch Zuordnung dieser unterschiedlichen Qualitätsstufen zu autarken Fehlerkorrektursystemen bleiben diese Unterschiede erhalten und ermöglichen so eine relevanzangepasste Verteilung der Nutzdaten. Höhere Qualitätsstufen mit niedrigerer Bitfehlerrate erhalten die Daten mit dem höchsten Informationsgehalt, während Daten mit niedrigerem Informationsgehalt auf niedrigere Qualitätsstufen verteilt werden.

Die Vorteile gegenüber einem einzelnen Fehlerkorrektursystem ergeben sich erstens durch einen deutlich verbesserten Höreindruck bei gleicher Kanalbitfehlerrate. Dieser Effekt ergibt sich bei geschickter Wahl der Parameter, obwohl die Restbitfehlerrate nach der Korrektur unter Umständen sogar höher ausfällt als bei einem einzelnen Fehlerkorrektursystem. Ein weiterer Effekt ergibt sich in einer automatischen und kontinuierlichen Anpassung der Endqualität an die Kanaleigenschaften. Im Gegensatz zu einem sprunghaften Abreißen der Verbindung ergibt sich zunächst eine kontinuierliche Verschlechterung der Qualität ("Graceful Degradation"). Das Hörempfinden verlagert sich von plötzlichem "Knacksen" auf ein kontinuierliches Ansteigen des Hintergrundrauschens, was der Hörer als wesentlich angenehmer empfindet. Der Zusammenhang zwischen höherem Rauschen bei schlechter Funkverbindung entspricht eher den bisherigen Hörgewohnheiten bei analoger Übertragung.

Anhand einiger weiterer Beispiele können die verschiedenen Möglichkeiten aufgezeigt werden:

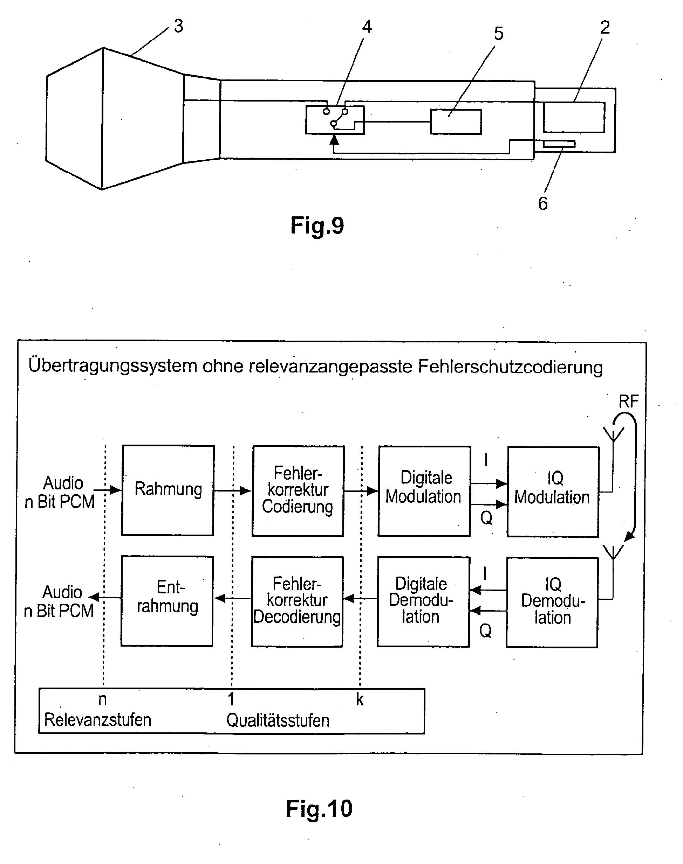

**Fig. 10**    Strukturdiagramm für ein Übertragungssystem ohne relevanzangepasste Fehlerschutzcodierung;

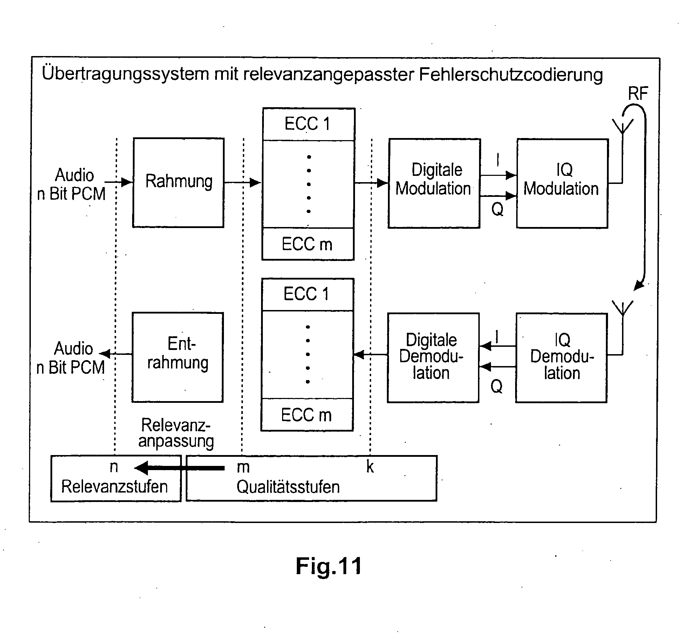

**Fig. 11**    Strukturdiagramm für ein Übertragungssystem mit relevanzangepasster Fehlerschutzcodierung.

Voraussetzungen für das Verfahren:

- nach der digitalen Demodulation existieren mehr als k=1 Qualitätsstufen, weshalb ein hochwertiges digitales Modulationsverfahren mit mindestens drei Bit pro Symbol notwendig ist, da sonst keine unterschiedlichen Qualitätsstufen in den uncodierten Daten zu erwarten sind (k=1 )

- die zu übertragenden Daten enthalten mehr als n=1 Relevanzstufen, weshalb sich das Verfahren z. B. auf PCM-codierte Audiodaten anwenden lässt.

- von den vorhandenen k Qualitätsstufen lassen sich mehrere zu den gewünschten m zusammenfassen, weshalb gilt: m ≤k

- von den vorhandenen n Relevanzstufen lassen sich mehrere zu den gewünschten m zusammenfassen, weshalb gilt: m ≤n.

Die bisherige Beschreibung der relevanzangepassten Fehlerschutzcodierung nach Figur 11 hat neben den beschriebenen Vorteilen insbesondere beim Realisierungsaufwand Nachteile, da mehrere Coder und Decoder parallel betrieben werden müssen. Dies erfordert einerseits einen erhöhten Hardwareaufwand gegenüber einer einfachen Codierung, andererseits steigt u. U. auch die Verzögerung der Daten. Viele Decoder arbeiten nämlich mit einem festen Delay (in Bit gerechnet). Teilt sich nun die Gesamtdatenrate auf mehrere parallele Datenströme auf, so sinkt die Datenrate pro Decoder und das gesamte Delay (gemessen in Zeit) steigt an. Das Gesamtdelay wird dabei durch den Decoder mit der niedrigsten Datenrate bestimmt.

Ein Zahlenbeispiel mag dies aufzeigen:

Wenn das Decoder-Delay bei 400 Bit liegt und die gesamte Datenrate bei 1 MBit/s, so liegt das Delay (also die Verzögerung) bei einem Decoder von $t_{Decoder}$ bei 400 Bit/1 MBit/s, also 400 μs.

Liegt die Datenrate im ersten Decoder 1 bei 0,4 MBit/s und die Datenrate im Decoder 2 bei 0,6 MBit/s (0,4 MBit/s + 0,6 MBit/s = 1 MBit/s), ergibt sich ein Delay bei zwei Decodern von

$$t_{decoder} = \max\left(t_{decoder1}; t_{decoder2}\right) = \max\left(\frac{400\,Bit}{0,4\,\frac{MBit}{s}}; \frac{400\,Bit}{0,6\,\frac{MBit}{s}}\right) = \max\left(1ms; 0,\overline{6}ms\right)$$

und dies bedeutet gemäß obiger Ausführungen ein Delay von 1 ms, weil der Decoder mit der niedrigsten Datenrate das Gesamtdelay bestimmt.

Eine erfindungsgemäße Lösung dieses Problems bei gleichzeitiger Erhaltung der relevanzangepassten Codierung liegt in der Verwendung eines Faltungscodes mit anschließender "variabler Punktierung". Die verschiedenen Qualitätsstufen werden dabei nicht mehr in parallele Datenströme aufgeteilt, sondern durch einen jeweils gemeinsamen Coder bzw. Decoder hoher Qualität (und durch die höhere Datenrate damit auch schnell) verarbeitet. Anschließend erfolgt eine Punktierung, um die Redundanz wieder auf ein gewünschtes Maß zu reduzieren.

Im Gegensatz zu dem im Stand der Technik bekannten Verfahren erfolgt diese Punktierung aber nicht konstant, sondern variabel und angepasst an die zu verarbeitenden Daten. Diese Punktierung wird im Empfänger entsprechend wieder umgekehrt und anschließend kann die Decodierung in einem gemeinsamen Decoder erfolgen. Dabei bleibt das Delay möglichst gering.

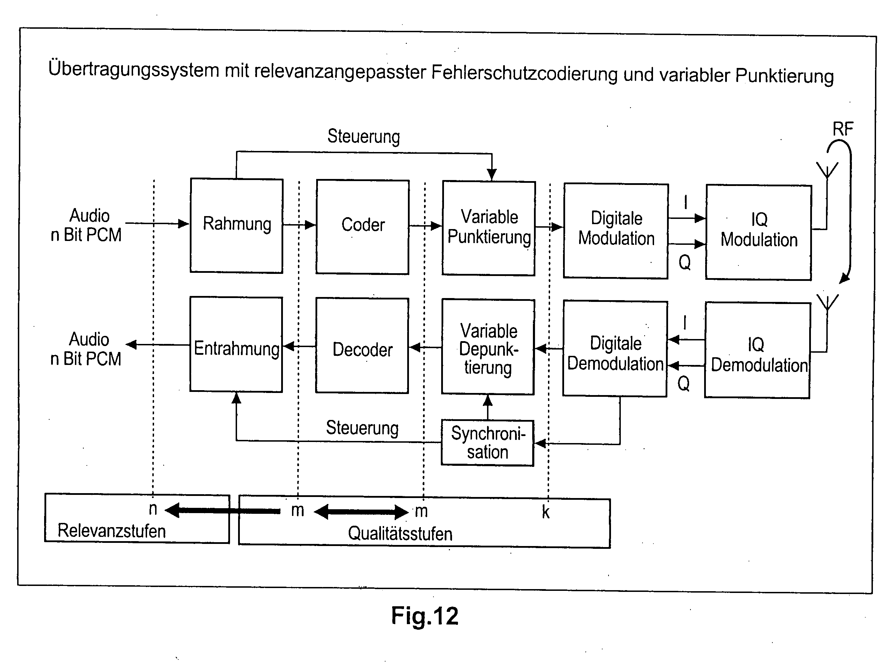

Dies wird auch durch das Diagramm nach Figur 12 verdeutlicht.

In diesem Zusammenhang sei auf den Stand der Technik nach WO 03/069918, US 6,170, 073, EP 0 798 888, US 5,751,739 verwiesen. Zusammenfassend kann man sagen, dass der vorgenannte Stand der Technik zwar insgesamt einen ungleichmäßigen Fehlerschutz offenbart, aber keine Anpassung auf hochwertige Modulationsverfahren vorschlägt. Im Gegensatz dazu ist bei dem erfindungsgemäßen Verfahren die parallele ungleichmäßige Codierung auch zur Erhaltung der Qualitätsstufe und des Modulationssymbols genutzt. Der ungleichmäßige Fehlerschutz wird bei den vorgenannten Dokumenten aus dem Stand der Technik meistens genutzt, um auf einem Kanal mit einer Qualitätsstufe mehrere zu erzeugen, während sie bei der Erfindung dazu dient, die Stufen zu erhalten.

Alternativ oder zusätzlich zum relevanzangepassten Bitmapping kann dem Analogsignal abhängig von der Restfehlerrate oder anderen Qualitätskriterien ein künstliches Rauschsignal hinzugemischt werden, um Restfehler zu verschleiern. Dadurch wird der gewohnte Höreindruck analoger Übertragung noch verstärkt.

Fehler-Verschleierung und/oder Zumischung von Rauschen kann auf verschiedenen Ausgängen des Empfängers unabhängig voneinander eingesetzt werden. Dadurch können z. B. die Produktionsstrecke und eine Mithörstrecke mit unterschiedlichen Verfahren und/oder unterschiedlichen Parametern verschieden stark behandelt werden.

Bei Bedarf kann bestimmten Ausgängen eine Zusatzinformation zugemischt werden, die den Anwender oder Überwachungspersonal einen akustischen Hinweis auf bestimmte Betriebszustände signalisiert. So kann z. B. an der Grenze der Reichweite ein Summton eingemischt werden, der einen bevorstehenden Abriss der Verbindung signalisiert. Die Signalisierung kann durch verschiedenste Töne oder Tonfolgen, aber auch in Klartext erfolgen.

Die vorliegenden Erfindungen, insbesondere das beschriebene Übertragungsverfahren sind nicht nur für Mikrofone besonders bevorzugt anwendbar, sondern auch in der entgegengesetzten Übertragungsrichtung, also für Lautsprechersysteme, Kopfhörersysteme und insbesondere für In-Ear-Monitorsysteme. Insbesondere dann, wenn das beschriebene drahtlose Übertragungsverfahren für Kopfhörer bzw. Ohrhörer jedweder Art eingesetzt wird und eine Stereoübertragung notwendig ist, wird beim analogen Eingang des Übertragungssystems eine geringe Audiodatenkompression eingesetzt, die dann empfangsseitig entsprechend dekomprimiert wird.

Soweit die einzelnen Erfindungsaspekte in der vorliegenden Anmeldung bereits in sehr konkretem Zusammenhang beschrieben sind, seien nachfolgend die einzelnen Erfindungsaspekte auch in allgemeinerer Form dargestellt. Hervorzuheben ist an dieser Stelle wiederum, dass die einzelnen Erfindungsaspekte schon für sich selbst eine eigenständige Erfindung darstellen können und nicht nur in Verbindung mit der gesamten weiteren Offenbarung, auch wenn die Zusammenschau aller Merkmale eine überaus vorteilhafte Ausführung ist, um einen hinsichtlich der Qualitätsansprüche ausreichendes und hinsichtlich des Aufwandes noch vertretbares digitales Mikrofon auszubilden.

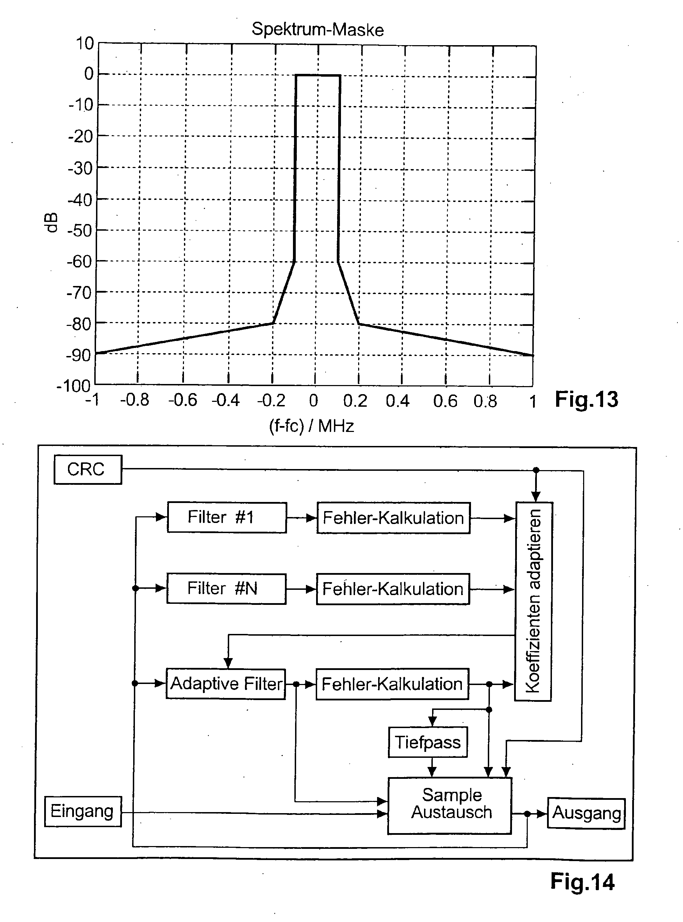

In **Figur 13** wird von der dargestellten Spektrumsmaske mit 200 kHz Nutzbandbreite ausgegangen.

Ausgehend von der zur Verfügung stehenden Bandbreite (BW) ergibt sich hieraus die Symbolrate ($f_{sym}$) gemäß der Formel:

$$BW = (1+\alpha) \cdot f_{sym} \qquad\qquad (1)$$

Ein sinnvoller Bereich der Parameter kann hierbei wie folgt angegeben werden:
BW $\leq$ 200 kHz, ein Impulsformungs-Rolloff-Faktor $\alpha$: 0,1 $\leq \alpha \leq$ 0,5 und eine Symbolrate im Bereich zwischen 130 kHz und 185 kHz.

Ein konkretes Wertebeispiel wäre hierbei eine Bandbreite BW von 200 kHz, ein $a$ von $0,\overline{3}$ und ein $f_{sym}$ von 150 kHz.

Durch ein hochwertiges Modulationsverfahren mit M Bit pro Symbol (bei einem Symbolvorrat von $2^M$) folgt für die codierte Bitrate ($f_{coded}$) gemäß der Formel

$$BW = (1+\alpha) \cdot \frac{1}{M} \cdot f_{coded} \qquad\qquad (2)$$

Hierbei ist ein sinnvoller Parameterbereich durch M $\geq$ 1 Bit und $\leq$ 8 Bit angegeben, ein Symbolvorrat von $2^M \geq$ 1 und $\leq$ 256 und eine codierte Bitrate ("Brutto") von $f_{coded} \geq$ 130 kBit/s und $\leq$ 1,48 MBit/s.

Ein konkretes Wertebeispiel kann durch M = 4 Bit (z. B. QAM-16), $2^M$ = 16 und $f_{coded}$ = 600 kBit/s angegeben werden.

Mit einer Coderate C, die definiert ist durch den Quotienten von $C_{in}$ und $C_{out}$ folgt hieraus die uncodierte Bitrate $f_{uncoded}$ gemäß der Formel:

$$BW = (1+\alpha) \cdot \frac{1}{M} \cdot \frac{1}{C} \cdot f_{uncoded} \qquad\qquad (3)$$

und

$$BW = (1+\alpha) \cdot \frac{1}{M} \cdot \frac{C_{out}}{C_{in}} \cdot f_{uncoded} \qquad\qquad (4)$$

Ein sinnvoller Parameterbereich für die Coderate liegt hier bei ≥1/2 und ≤1 und für die uncodierte Bitrate ("Netto") ≥65 kBit/s und ≤1,48 MBit/s. Ein vortreffliches Parameterbeispiel für C liegt hierbei bei 3/4, also 0,75 und für $f_{uncoded}$ bei 450 kBit/s.

Schließlich lässt sich für eine geschickte Punktierungssynchronisation ein Faktor zwischen der Code-Ausgangslänge $C_{out}$ und der Modulationswertigkeit M beschreiben gemäß der Formeln:

$$\frac{C_{out}}{M} = k \tag{5}$$

$$BW = (1+\alpha) \cdot \frac{C_{out}}{M} \cdot \frac{1}{C_{in}} \cdot f_{uncoded} \tag{6}$$

Ein sinnvoller Parameterbereich für k (Synchronisationskopplung) liegt hierbei bei

$$k = \left\{ \frac{1}{n}; \ldots; \frac{1}{2}; 1; 2; \ldots; n \right\}, n \in N^* \tag{7}$$

Ein konkretes Wertebeispiel für k = $C_{out}$ / M kann angegeben werden mit 4/4, also 1.

Über die verwendete Datenstrukturierung ergibt sich hierbei eine Audiodatenrate $f_{Audio}$ und hierbei stellt sich gemäß vorgenannter Formel BW wie folgt dar:

$$BW = (1+\alpha) \cdot \frac{C_{out}}{M} \cdot \frac{1}{C_{in}} \cdot FR \cdot f_{Audio} \tag{8}$$

Ein sinnvoller Parameterbereich für die Framerate FR ist hierbei ≥1 und ≤1,5 und die Audiodatenrate $f_{Audio}$ sollte üblicherweise ≥43 kBit/s und ≤1,48 MBit/s betragen. Ein konkretes Zahlenbeispiel kann für FR mit 1,125 und $f_{Audio}$ mit 400 kBit/s angegeben werden.

Unter der weiteren Annahme einer PCM-Codierung der Audiodaten folgt hiermit eine Audio-Samplingrate $f_s$, was in die bereits vorgelegte Formel für die Bandbreite wie folgt eingeht:

$$BW = (1+\alpha) \cdot \frac{C_{out}}{M} \cdot \frac{1}{C_{in}} \cdot FR \cdot N \cdot f_s \tag{9}$$

Ein sinnvoller Parameterbereich für die PCM-Auflösung N liegt hier bei ≥12 und ≤24 und für die Audio-Samplingrate ≥1,8 kHz und ≤124 kHz. Ein konkretes Zahlenbeispiel kann angegeben werden für N = 16 und $f_s$ = 25 kHz.

Die notwendige Bandbreiten-Effizienz ergibt sich hierzu gemäß der Formel:

$$Eff_{BW} = \frac{BW}{f_{coded}} = \frac{(1+\alpha)}{M} \frac{Hz}{\frac{Bit}{s}} \tag{10},$$

so dass sich mit den vorgenannten Parameterbereichen für *a* und M eine Bandbreiten-Effizienz von ≥0,1375 Hz/Bit/s und ≤1,5 Hz/Bit/s ergibt.

Bei der Annahme von einem Wert für α = 0, $\overline{3}$ und M = 4 Bit ergibt sich eine Bandbreiten-Effizienz

$$Eff_{BW} = 0,\overline{3}\,\frac{Hz}{\frac{Bit}{s}} \qquad\qquad (11)$$

Der beschriebene erfindungsgemäße digitale Empfänger kann neben verschiedenen digitalen Modulationen auch herkömmliche analoge, wie z. B. eine FM (Frequency Modulation) demodulieren. Ggf. vorgenommene Pre-Emphase oder Kompression wird dabei auf digitaler Ebene rückgängig gemacht. Der erfindungsgemäße Empfänger ist somit völlig rückwärtskompatibel zu den verschiedenen bereits etablierten Systemen.

Zum komfortablen Auffinden verschiedener modulierter Sender und/oder auch freier Übertragungskanäle kann der erfindungsgemäße Empfänger über eine Frequenz-Scan-Funktion verfügen, die dem Benutzer grafisch und/oder auch in tabellarischer Form die Bandbelegung anzeigt. Dabei können automatisch die Modulation des Senders sowie weitere Parameter der speziellen Modulation, wie z. B. der eingesetzte Kompander einer FM-Strecke ermittelt und angezeigt werden. Das Ergebnis der Scan-Funktion kann dazu benutzt werden, Vorschläge zur Wahl von Frequenzen für ein eigenes Audioübertragungssystem zu erarbeiten. Das System wird dadurch in die Lage versetzt, sich selbst zu konfigurieren.

Durch die Abtastung (AD-Wandlung) einer höheren Empfangsbandbreite im Empfänger, als sie in einer einzigen Übertragungsstrecke erforderlich ist, kann durch die folgende Kanalselektion im Digitalen mehr als ein Sender gleichzeitig empfangen und demoduliert werden. Dazu ist es erforderlich, die ZF-Bandbreite im Analogen, sowie die Dynamik der AD-Wandlung zu erhöhen.

Die Trennung der Kanäle erfolgt dann in der digitalen Ebene durch digitale Filter oder andere notwendige Rechenoperationen. Jeder Kanal kann dabei eigene Parameter aufweisen, sogar unterschiedliche Modulation oder verschiedenes Preprocessing.

Audiosignale der verschienen Kanäle können im Empfänger, insbesondere in einem Bodypack-Empfänger, lokal gemischt werden. Diese Mischung wird durch geeignete Bedienmittel lokal im Bodypack gesteuert oder automatisch nach vorgegebenen Parametern lokal durchgeführt oder fremdgesteuert durch abgesetzte Bedienkonsole (ähnlich Mischpult) von einem Toningenieur durchgeführt. Im letzteren Fall werden nur Steuersignale an das Bodypack übertragen. Die oben angegebenen Verarbeitungsvarianten sind nicht auf einen Bodypack-Empfänger beschränkt, sondern gelten auch für stationäre Empfänger entsprechend.

Dank der Software-bestimmten Funktionalität von Sender und Empfänger können die Eigenschaften der digitalen Übertragung sehr flexibel auf die Anforderungen verschiedener Einsatzfälle angepasst werden (Flexibilität durch Skalierbarkeit). So kann es nützlich sein, die Audioqualität zugunsten einer längeren Betriebszeit oder einer höheren Übertragungs-Reichweite der Anwendung angemessen herunterzuskalieren, z. B. für Sprache/Reportage. Andererseits kann die Audioqualität, -Dynamik und/oder -Abtastrate erhöht werden, wenn es nur eine geringe Strecke zu überbrücken gilt und/oder eine eingeschränkte Betriebszeit akzeptabel ist.

Auch Mono,- Stereo- und Doppel-Mono-Audioübertragung sind als Optionen für verschiedene Einsatzfälle wählbar.

Der digitale Datenstrom kann verschlüsselt übertragen werden, z. B. durch die bislang bekannten Verschlüsselungsmechanismen und -Verfahren, wodurch das Abhören der Funkstrecke wirkungsvoll verhindert werden kann. Nur wenn Sender und Empfänger über den gleichen Schlüssel verfügen, ist die Audioübertragung, insbesondere der Empfang, möglich.

Die Verschlüsselung hat den Vorteil, dass das Audiosignal des Mikrofons nicht von einem Dritten leicht empfangen werden kann, sondern nur von dem Empfänger, der dem Mikrofon zugeordnet ist und somit kann auch bei einer Präsentation auf der Bühne, in einem Fernsehstudio oder anderswo nicht irgendjemand das Mikrofonsignal entschlüsselt empfangen und somit ungenehmigte Aufnahmen machen.

Im Gegensatz zu den bisherigen Diversity-Verfahren kann beim erfindungsgemäßen digitalen Empfänger nicht nur zwischen den einzelnen Empfangskanälen umgeschaltet werden, sondern eine gleichzeitige Verarbeitung aller einlaufenden Datenströme stattfinden. Da die Bits der Datenströme mit einer Qualitätsinformation (Soft-Decision) versehen sind, kann für jedes Bit neu entschieden werden, aus welchem Empfangszweig es gewählt wird. Der Auswahlalgorithmus kann sowohl umschaltend wirken als auch eine gewichtete Zusammenführung durchführen. Damit ist die vorteilhafteste Gewichtung der Datenströme aus mehreren Kanälen möglich und der Informationsgehalt wird optimal ausgenutzt. Der Auswahlalgorithmus kann durch weitere Seiteninformation unterstützt werden, wie z. B. Feldstärke des Antennensignals oder aktuelle Bitfehlerrate. Der Algorithmus kann adaptiv oder umschaltbar ausgeführt werden, um die HF-Charakteristika des Raumes zu berücksichtigen.

Für die Darstellung einer kontinuierlichen Gewichtung wird eine Anzeige gewählt, die diese Kanal-Balance für die Nutzer sinnvoll darstellt. Für die Darstellung der Gewichtung von zwei Empfangskanälen wird bevorzugt ein von der Mitte ausgehender Balken gewählt, der die Tendenz zum einen oder anderen Kanal zu seinen beiden Seiten darstellt. Somit verfügt der erfindungsgemäße Empfänger über eine Diversity-Gewichtungs-Anzeige.

Zur Verschleierung von verbliebenen Restfehlern wird ein auf effiziente Verarbeitung optimiertes Verfahren eingesetzt. Dieses besteht im Wesentlichen aus einer Anzahl N fester Filter mit einer Filtertiefe k. Diese sind für typische Audiosignale optimiert und lassen sich algorithmisch sehr einfach umsetzen. Ein adaptives Filter wird durch einen Adaptionsalgorithmus an das momentan optimale Filter herangeführt. Dadurch wird eine kontinuierliche Anpassung an das Audio-Signal gewährleistet. Durch die CRC-Prüf-Summe wird entschieden, ob das adaptive Filter momentan angelernt oder für eine Audio-Sample-Ersetzung herangezogen wird. Nur wenn der momentane Vorhersagefehler deutlich über dem mittleren Vorhersagefehler liegt und die CRC-Summe einen Fehler anzeigt, wird eine Ersetzung vorgenommen. Diese Schwelle oder der zugrundeliegende Algorithmus kann ebenfalls adaptiert werden. Zur Vermeidung von Fehlerfortpflanzung ist ferner eine Rückkopplung der ersetzten Samples notwendig.

Das zuletzt geschilderte Post-Error-Concealment ist in Figur 14 dargestellt.

Eine digitale Realisierung von Mikrofonsendern- und/oder Empfängern gestattet es auf einfache Weise, Zusatzfunktionen zu integrieren, die die Einrichtung oder Überprüfung der Funkstrecke sowie weiterer, eventuell drahtgebundener Verbindungswege des Audiosignals ermöglichen. Ein automatisch im Sender und/oder Empfänger generiertes Audio-Testsignal bekannter Amplitude (z. B. Sinuston, Rauschen etc.) gestattet es, die Audio-Verbindungswege zu prüfen und insbesondere auch die Übertragungsstrecken und Verarbeitungsgeräte richtig einzupegeln. Ein automatisch im Sender generiertes Modulationssignal bekannter Symbolabfolgen (z. B. PRBS-Folge, sequentielle Folge aller Symbole etc.) gestattet die messtechnische Erfassung und Prüfung der Qualität des ausgestrahlten Signals und der Funkstrecke.

Für einen Mikrofonempfänger ist es auch sehr vorteilhaft, wenn dieser mit einem umschaltbaren (umsteckbaren) Filter am Empfängereingang versehen ist. Ferner ist es auch besonders vorteilhaft, wenn der Filter am Empfängereingang in der Empfängerantenne integriert ist, z. B. auch mit der Antenne der Empfänger geschraubt werden kann bzw. angesteckt werden kann. Mithin ist dann das Eingangsfilter des Empfängers mit der Antenne eine Einheit und eine solche elektronisch abschirmbare Antenne ist besonders vorteilhaft, weil durch das Anbringen der Antenne auch gleichzeitig die Filtereigenschaften des Empfängers einstellbar sind.

Ferner ist es vorteilhaft, wenn in der Antenne und im Empfänger Einrichtungen enthalten sind, die den Empfänger in die Lage versetzen, sich auf antennenspezifische Parameter einzustellen bzw. anzuzeigen, dass die Antenne nicht zum gewünschten Empfangsfrequenzbereich passt.

Schließlich ist es auch besonders vorteilhaft für ein erfindungsgemäßes Mikrofonsystem, wenn Mittel zur Frequenzgang- bzw. Klangcharakteränderung vorgesehen sind, so dass durch einen entsprechendes Sounddesign das Mikrofon eine gewünschte Charakteristik aufweisen kann, z. B. die Charakteristik eines Mikrofons, wie das berühmte U87 von Georg Neumann, Berlin, oder MD 421 von Sennheiser, und andere. Durch die Mittel zur Frequenzgang- bzw. Klangcharakteränderung kann also ein Kunde eine gewünschte Charakteristik einstellen, insbesondere auch eine solche Charakteristik wählen, die vielleicht nicht im akustischen Sinne optimal ist, aber charakteristisch ist für eine bestimmte Mikrofongeneration bzw. einen bestimmten Mikrofontyp.

Durch die Erfindung wird insgesamt eine bessere Frequenzökonomie erreicht und auch das Rückkopplungsverhalten wird besser.

**Patentansprüche**

**1.** Verfahren zur Übertragung von digitalen Audioinformationen in hoher Qualität und mit geringer Verzögerung, insbesondere ein Verfahren zur Übertragung von digitalisierten Audioinformationen in einer Audioaufnahme (Mikrofon) und/oder Wiedergabestrecke,
wobei die Audioinformationen in Blöcken verarbeitet werden und die Audiobandbreite (HF) proportional ist der Symbolrate ($f_{sym}$), wobei in dem Verfahren bevorzugt keine Audiodatenkompression eingesetzt wird.

**2.** Verfahren nach Anspruch 1,
**dadurch gekennzeichnet, dass** bei einer Bandbreite von etwa 150 bis 250 kHz (bzw. einem Wert aus diesem Wertebereich) die Symbolrate typischerweise etwa im Bereich zwischen 130 bis 220 kHz, bevorzugt bei 150 kHz liegt und der Impulsformungs-Rolloff-Faktor ($\alpha$) typischerweise im Bereich zwischen 0,1 und 0,5, bevorzugt bei etwa 0, $\bar{3}$ liegt und die Bandbreite sich berechnet nach der Formel:

$$BW = (1 + \alpha) \cdot f_{sym}$$

3.  Verfahren zur Übertragung digitaler Audioinformationen in hoher Qualität und mit geringer Verzögerung, insbesondere Verfahren zur Übertragung von digitalisierten Audioinformationen in einer Audioaufnahme (Mikrofon) und/oder Wiedergabestrecke, wobei die Audiodaten in Blöcken verarbeitet werden, insbesondere nach einem der vorhergehenden Ansprüche, **dadurch gekennzeichnet, dass** ein hochwertiges Modulationsverfahren für die Übertragung der Audioinformation eingesetzt wird, bei welchem mehrere Bits in einem Modulationssymbol zusammengefasst und übertragen werden, wobei die Bandbreite umgekehrt proportional ist zur Modulationswertigkeit M, welche bevorzugt im Bereich von 1 bis 8 Bit, insbesondere im Bereich von M = 4 Bit liegt und die Bandbreite ferner proportional ist zur codierten Bitrate, welche bevorzugt im Bereich von etwa 130 kBit/s und 1480 kBit/s, vorzugsweise etwa bei 600 kBit/s liegt und der Symbolvorrat $2^M$ ist und im Bereich von 1 bis 256 liegt.

4.  Verfahren zur Übertragung digitaler Audioinformationen von hoher Qualität mit geringer Verzögerung, insbesondere Verfahren zur Übertragung von digitalisierten Audioinformationen in einer Audioaufnahme (Mikrofon) und/oder Wiedergabestrecke, insbesondere nach einem der vorhergehenden Ansprüche, **dadurch gekennzeichnet, dass** die Bandbreite umgekehrt proportional zur Coderate ist, wobei die Coderate bevorzugt $\geq 1/2$ und $\leq 1$ ist, vorzugsweise die Coderate dem Wert 0,75 entspricht und/oder dass die Bandbreite ferner proportional ist der uncodierten Bitrate ($f_{uncoded}$), wobei die uncodierte Bitrate bevorzugt $\geq 64$ kBit/s und $\leq 1480$ kBit/s ist und insbesondere einen Wert von 450 kBit/s annimmt.

5.  Verfahren zur Übertragung digitaler Audioinformationen in hoher Qualität mit geringer Verzögerung, insbesondere Verfahren zur Übertragung von digitalisierten Audioinformationen in einer Audioaufnahme (Mikrofon) und/oder Wiedergabestrecke, wobei keine Audiodaten-Kompression benutzt wird, die Audiodaten in Blöcken verarbeitet werden, insbesondere nach einem der vorstehenden Ansprüche, und die Bandbreite proportional ist zum Faktor k, der den Quotienten aus der Codeausgangslänge ($C_{out}$) und der Modulationswertigkeit M beschreibt, wobei k bevorzugt den Wert 1 annimmt, aber auch Werte aus dem Bereich 1/n; ...; 1/2 bzw. 1, 2, ... n aufweisen kann, wobei n eine natürliche Zahl ist.

6.  Verfahren zur Übertragung digitaler Audioinformationen in hoher Qualität mit geringer Verzögerung, insbesondere Verfahren zur Übertragung von digitalisierten Audioinformationen in einer Audioaufnahme (Mikrofon) und/oder Wiedergabestrecke, insbesondere nach einem der vorhergehenden Ansprüche, zur Übertragung digitaler Audioinformation hoher Qualität mit geringer Verzögerung, wobei keine Audiodaten-Kompression benutzt wird, die Audiodaten in Blöcken verarbeitet werden und wobei die Bandbreite proportional ist zur Audiodatenrate, welche bevorzugt im Bereich zwischen 43 kBit/s und 1480 Bit/s beträgt, bevorzugt etwa bei 400 kBit/s liegt und die Bandbreite ferner proportional ist zur Framerate, welche bevorzugt größer ist als 1 und kleiner ist als 1,5, bevorzugt bei einem Wert von 1,125 liegt.

7.  Verfahren zur Übertragung digitaler Audioinformationen in hoher Qualität mit geringer Verzögerung, insbesondere Verfahren zur Übertragung von digitalisierten Audioinformationen in einer Audioaufnahme (Mikrofon) und/oder Wiedergabestrecke, insbesondere nach einem der vorstehenden Ansprüche, zur Übertragung digitaler Audioinformationen mit hoher Qualität und geringer Verzögerung, wobei keine Audiodaten-Kompression benutzt wird, die Audiodaten in Blöcken verarbeitet werden, die Audiodaten einer PCM-Codierung unterworfen werden mit einer PCM-Auflösung N, wobei N bevorzugt $\geq 12$ und $\leq 24$, z. B. bei 16, liegt und die Audio-Samplingrate $f_s$ etwa $\geq 1,8$ kHz und $\leq 124$ kHz ist, bevorzugt etwa bei 25 kHz liegt.

8.  Verfahren zur Übertragung digitaler Audioinformationen in hoher Qualität und geringer Verzögerung, insbesondere Verfahren zur Übertragung von digitalisierten Audioinformationen in einer Audioaufnahme (Mikrofon) und/oder Wiedergabestrecke, wobei keine Audiodaten-Kompression benutzt wird, die Audiodaten in Blöcken verarbeitet werden, insbesondere nach einem der vorhergehenden Ansprüche, **dadurch gekennzeichnet, dass** die Audiodaten nach der Codierung einer Punktierung, bevorzugt einer variablen Punktierung unterworfen werden, die an die zu verarbeitenden Daten angepasst ist und diese Punktierung wird beim Empfang der codierten Daten entsprechend umgekehrt der Decodierung vorgeschaltet.

9.  Verfahren, zur Übertragung digitaler Audioinformationen in hoher Qualität und geringer Verzögerung, insbesondere Verfahren zur Übertragung von digitalisierten Audioinformationen in einer Audioaufnahme (Mikrofon) und/oder Wiedergabestrecke, insbesondere nach einem der vorhergehenden Ansprüche, zur Übertragung von digitalen Audiodaten in hoher Qualität mit geringer Verzögerung,
wobei die digitalen Audiodaten sendeseitig in Rahmen zerlegt werden, wobei jeder Rahmen eine Rahmenlänge von $R_{uncoded}$ Bit aufweist, wobei dieser Rahmen eine ganzzahlige Anzahl von Abtastwerten (Samples) der Bitlänge N enthält, E Bit zur Fehlererkennung bzw. Fehlerkorrektur vorgesehen sind, S Bit für die Synchronisation und A Bit für anderweitige Zwecke verwendet werden und dass der Rahmen durch einen oder mehrere Kanalcoder und der Anwendung einer Gesamt-Coderate C im Bereich zwischen 0,5 und 1 auf eine Rahmenlänge von $R_{coded} = R_{coded}/C$ Bit gedehnt wird, und/oder $R_{coded}$ ein ganzzahliges Vielfaches der Symbollänge M ist, wobei der Wert für $R_{uncoded}$ ein Wert aus dem Wertebereich zwischen 20 und 500 Bit ist und der Wert für $R_{coded}$ ein Wert aus dem Wertebereich zwischen 20 und 100 Bit ist.

10. Vorrichtung zur Übertragung von digitalisierten Audioinformationen gemäß einem oder mehrerer der vorhergehenden Ansprüche,
wobei als Übertragungsweg bevorzugt ein Kanalfilter zur Formung des HF-Spektrums (Figur 13) eingesetzt wird, dass in etwa 100 bis 300 kHz Abstand zur Trägermitte eine Sperrdämpfung von mehr als 60 dB aufweist.

11. Verfahren und Vorrichtung nach einem der vorhergehenden Ansprüche,
**dadurch gekennzeichnet, dass** im Sender die Funktionalitäten Rahmenerzeugung, Kanal-Codierung, Symbol-Generator sowie im Empfänger die Funktionalitäten für die Symbol-Decodierung, Kanal-Decodierung und Rahmenzerlegung so ausgelegt sind, dass sie die zu übertragenden Daten nach verschiedenen Relevanzstufen sortieren können, angefangen von der geringsten und/oder höchsten Relevanzstufe zur jeweiligen höheren/niederen Relevanzstufe, und/oder dass die verschiedenen Relevanzstufen unterschiedlich und unabhängig voneinander bearbeitet werden können.

12. Verfahren und Vorrichtung nach einem der vorhergehenden Ansprüche,
**dadurch gekennzeichnet, dass** im Symbol-Generator sendeseitig eine Zuordnung von Daten hoher Relevanz zu sichereren Bitpositionen und niedriger Relevanz zu unsichereren Bitpositionen erfolgt,
wobei optional sendeseitig zum Abstrahlen eines Hochfrequenz-(HF-)Signals mehrere Antennen oder Antennensegmente benutzt werden bzw. vorgesehen sind und dass diejenigen Antennen oder Antennensegmente bevorzugt zur Abstrahlung benutzt werden, die augenblicklich die beste Anpassung haben,
wobei gegebenenfalls das empfangene Signal durch eine A/D-Wandlereinrichtung digitalisiert wird, die mit einem Takt konstanter Frequenz betrieben wird und deren Abtastrate einem Mehrfachen der Basisband-Nyquist-Rate entspricht und die wahre Symbolrate in einer separaten, unabhängigen Einrichtung zurückgewonnen wird und/oder das eigentliche Symbol in einer Interpolationsschaltung berechnet wird und/oder die Signalverarbeitung asynchron zum Sendetakt erfolgt und die Synchronisierung auf den genauen Sendetakt erst am Ende der Signalverarbeitungskette erfolgt,
wobei gegebenenfalls empfangsseitig ein oder mehrere Empfangspfade vorgesehen sind, und dass im Symbol-Decoder Seiteninformationen aus den Symbolverzerrungen und/oder den Empfangsfeldstärken jedes Empfangspfades gewonnen werden und dass die in dem Kanal-Decoder einlaufende Information Beiträge aus allen Empfangspfaden enthält,
wobei gegebenenfalls zur Verschleierung von Restfehlern ein Algorithmus eingesetzt wird, der bevorzugt keine exakte Information über die Fehlerposition bekommt,
und bevorzugt die Daten aus dem Verschleierungsalgorithmus nur dann benutzt werden, wenn ein übertragener Datenrahmen als fehlerhaft erkannt wurde.

13. Verfahren und Vorrichtung nach einem der vorhergehenden Ansprüche,
**dadurch gekennzeichnet, dass** eine kontinuierliche, nichtlineare Kennlinie als Quellenkodierung benutzt wird (Figur 4), die aus mindestens zwei Segmenten besteht, wobei das erste Segment linear ist und das zweite (und/oder alle weiteren) Segment nichtlinear sind.

14. Verfahren und Vorrichtung nach einem der vorhergehenden Ansprüche,
mit einer analogen Eingangsschaltung, bestehend aus einem einstellbaren Eingangsverstärker, einer Begrenzungseinrichtung zur Vermeidung von Übersteuerung, einer Digitalisierungseinrichtung mit der Wortbreite K und einer Recheneinrichtung zur Berechnung einer nichtlinearen Kennlinie,
wobei die nichtlineare Kennlinie für positive Werte aus wenigstens zwei Segmenten besteht, das Segment für kleine Eingangswerte (120) linear ist und das oder die Segmente (121) nichtlinear sind, die Stoßstelle zwischen den Segmenten so berechnet ist, dass die Tangenten an den Kurven bei Annäherung von beiden Seiten an die Stoßstelle zusammenfallen, die Kennlinie für negative Eingangswerte (122, 123) symmetrisch zu entsprechenden positiven Eingangswerten gestaltet wird und die Ausgangswortbreite L der nichtlinearen Kennlinie kleiner als die Wortbreite der Digitalisierungseinrichtung ist.

15. Verfahren und Vorrichtung nach Anspruch 14,
**dadurch gekennzeichnet, dass** an die Eingangsschaltung ein Mikrofon direkt angeschlossen ist oder ein Mikrofon ansteckbar ist oder analoge, hochpegelige Signale angeschlossen werden können,
wobei bevorzugt die Eingangsschaltung einen Umschalter (108) enthält, um alternativ einen digitalen Eingang auszuwählen,
wobei gegebenenfalls die Steigung des ersten Segments (120 bzw. 122) ungleich 1 ist,
wobei bevorzugt die erwähnte Begrenzungsschaltung bereits in einer Digitalisierungseinrichtung enthalten ist,
wobei bevorzugt Rahmenlänge, Kanal-Coder und Wortbreite der Modulationssymbole abhängig voneinander gewählt sind, die Rahmenlänge ein ganzzahliges Vielfaches der Wortbreite der Abtastwerte ist, die Rahmenlänge ein ganzzahliges Vielfaches der Eingangswortbreite des Kanal-Coders ist und/oder die Anzahl der Bits pro Modulationssymbol gleich der Ausgangswortbreite des Kanal-Coders ist und/oder das notwendige Zusatzdaten unter Weglassung von Abtastwerten in den Rahmen eingefügt werden
und gegebenenfalls die Anzahl der Bits pro Modulationssymbol oder deren Kehrwert ein ganzzahliges Vielfaches der Ausgangswortbreite des Kanal-Coders ist.

16. Mikrofon, insbesondere digital realisiertes Funkmikrofon, nach einem der vorhergehenden Ansprüche,
**dadurch gekennzeichnet, dass** das Mikrofon in einen Testmode schaltbar ist, in welchem ein definiertes Audiosignal (z. B. Sinuston, Rauschen etc.) mikrofonseitig generiert und anstelle des Mikrofonsignals ausgesendet wird,
wobei gegebenenfalls der Empfänger in einen Testmode geschaltet werden kann, in welchem ein definiertes Audiosignal (z. B. Sinuston, Rauschen etc.) generiert und individuell an den Ausgängen des Empfängers zur Verfügung gestellt wird
und gegebenenfalls das Mikrofon in einen Testmode schaltbar ist, in welchem mikrofonseitig ein definiertes Modulationssignal mit bekannten Modulationssymbolen (z. B. PRBS-Folge, sequentielle Folge etc.) ausgesendet wird.

10  22  20  30  35  40  45  46

Zusatz Daten

| Audio Quelle | Rahmen Erzeugung | Kanal Coder | Symbol Generator | Kanal Filter | HF Sender |

**Fig.1**

50  62  60  70  75  80  85  86

Zusatz Daten

| Audio Senke | Rahmen Zerlegung | Kanal Decoder | Symbol Decoder | Kanal Filter | HF Empfänger |

**Fig.2**

**Fig.3**

**Fig.4**

Fig.5

EP 2 192 788 A2

Fig.6

Fig.7

Fig.8

**Fig.9**

Übertragungssystem ohne relevanzangepasste Fehlerschutzcodierung

**Fig.10**

**Fig.11**

# Übertragungssystem mit relevanzangepasster Fehlerschutzcodierung und variabler Punktierung

**Fig.12**

EP 2 192 788 A2

## Spektrum-Maske

**Fig.13**

**Fig.14**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03069918 A
- US 6170073 A
- EP 0798888 A
- US 5751739 A